# FASCICULE DE BREVET EUROPEEN

(11) **EP 4 383 418 B1**
(45) Date de publication et mention de la délivrance du brevet: **13.08.2025**
(21) Numéro de dépôt: 23214269.5
(22) Date de dépôt: 05.12.2023
(51) Int. Cl.: H01M 50/211, H01M 50/249, H01M 50/258, H01M 50/298, H01M 50/502, H01M 50/503, H01M 50/516, H01M 50/578, H01M 50/557

(54) **MODULE DE BATTERIE À EMPILEMENT D'ACCUMULATEURS À EMBALLAGE SOUPLE LOGÉS DANS DES SUPPORTS FIXÉS ENTRE EUX PAR LIAISON PAR COMPLÉMENTARITÉ DE FORMES ET SUPPORTANT DES BUSBARS À LIGNES DE RUPTURE À FONCTION D'INTERRUPTEUR DE COURANT (CID)**
BATTERIEMODUL MIT EINEM STAPEL AUS FLEXIBLEN VERPACKUNGEN, DIE IN TRÄGERN MIT FORMSCHLÜSSIGER VERBINDUNG STEHEN, DIE BUSBAR MIT STROMUNTERBRECHUNGSLEITUNGEN (DCI) UNTERSTÜTZEN
BATTERY MODULE HAVING A FLEXIBLE PACK BATTERY STACK ACCOMMODATED IN HOLDERS INTERCONNECTED IN FORM-FITTING MANNER AND SUPPORTING CIRCUIT BREAKER-LINE BUSBAR

(30) Priorité: 07.12.2022 FR 2212926
(43) Date de publication de la demande: 12.06.2024
(73) Titulaire: Commissariat à l'Energie Atomique et aux Energies Alternatives, 75015 Paris (FR)
(72) Inventeur: DEWULF, Frédéric, 38054 GRENOBLE CEDEX 09 (FR); JOST, Pierre, 38054 GRENOBLE CEDEX 09 (FR)
(74) Mandataire: Ipsilon

(56) Documents cités:
- EP-A1- 3 537 510
- EP-A1- 3 985 769
- CN-A- 105 226 320
- US-A1- 2011 135 977
- US-A1- 2016 118 823

## Description

### Domaine technique

La présente invention concerne le domaine des accumulateurs électrochimiques, et plus particulièrement à des accumulateurs métal-ion.

Plus particulièrement, l'invention a trait à un module de batterie, à empilement d'accumulateurs à emballage souple.

L'invention vise en premier lieu à améliorer les assemblages par empilement d'accumulateurs souples.

Bien que décrite en référence à un accumulateur Lithium-ion, l'invention s'applique à tout accumulateur électrochimique métal-ion, c'est-à-dire également Sodium-ion, Magnésiumion, Aluminium-ion...ou de manière plus générale à tout accumulateur électrochimique. L'invention s'applique à toute chimie d'accumulateurs métal-ion, comme par exemple NMC/Graphite, NCA/Graphite, NMC/G-Si, LFP/ Graphite, Na-ion avec électrolyte liquide ou électrolyte dit solide.

Un module de batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

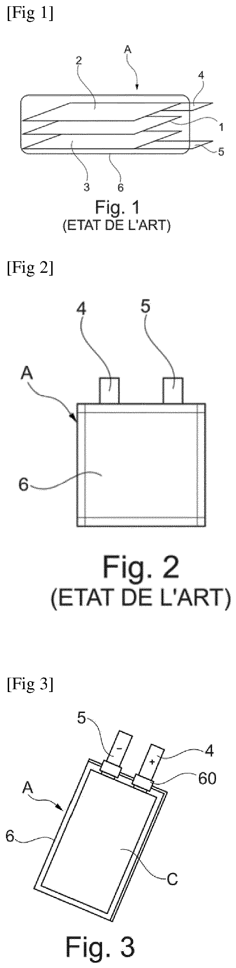

Telle qu'illustrée schématiquement en figures 1 et 2, une batterie ou accumulateur lithium-ion comporte usuellement au moins une cellule électrochimique C constituée d'un constituant d'électrolyte 1, imprégné dans un séparateur permettant d'isoler électriquement les électrodes, entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique et la rendre étanche à l'air extérieur et à l'électrolyte à l'intérieur de la cellule, tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique, avec enroulement autour d'un axe cylindrique telle que divulguée dans la demande de brevet US 2006/0121348,
- une géométrie prismatique, avec enroulement autour d'un axe parallélépipédique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF₆.

L'électrode positive ou cathode est constituée de matériaux d'insertion du cation Lithium qui sont en général composite, comme le phosphate de fer lithié LiFePO₄, l'oxyde de cobalt lithié LiCoO₂, l'oxyde de manganèse lithié, éventuellement substitué, LiMn₂O₄ ou d'oxyde de métaux de transition, comme les matériaux lamellaires par exemple, un matériau à base de LiNixMnyCozO₂ avec x+y+z = 1, tel que LiNi_{0.33}Mn_{0.33}Co_{0.33}O₂, ou un matériau à base de type oxyde de nickel cobalt aluminium LiNixCoyAlzO2 avec x+y+z = 1, tel que LiNi_{0.8}Co_{0.15}Al_{0.05}O₂.

L'électrode négative ou anode est très souvent constituée de carbone, graphite ou de Li₄TiO₅O₁₂ (matériau titanate), éventuellement peut-être à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en œuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en nickel, en cuivre nickelé ou en aluminium.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Traditionnellement, une batterie ou accumulateur Li-ion utilise un couple de matériaux à l'anode et à la cathode lui permettant de fonctionner à un niveau de tension, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples, communément désignés sous la dénomination anglo-saxonne « Pouch », sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le propylène, le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N °ADR-0N25/AL40/CPP80.

La figure 3 illustre ce type d'emballage souple 6 qui est agencé pour isoler et étanchéifier la cellule électrochimique C tout en étant traversé par une partie de deux lamelles ou languettes 4, 5, communément appelée en anglais « tab », formant les bornes ou pôles et qui s'étendent dans le plan de la cellule électrochimique. La languette 4, constituant la borne positive, se présente sous la forme d'un feuillard métallique d'épaisseur de 0,2 à 0,4 mm, le plus souvent en aluminium. La languette 5, constituant la borne négative, se présente sous la forme d'un feuillard métallique de 0,2 à 0,4 mm, le plus souvent en matériau nickel ou en cuivre ou en cuivre nickelé.

L'avantage principal des emballages souples est leur légèreté. Les accumulateurs Li-ion avec les plus grandes densités d'énergie comportent de ce fait un emballage souple.

Un accumulateur souple, communément appelé en anglais *« Thin Film Battery»,* est le plus souvent constitué d'une seule cellule électrochimique.

L'épaisseur totale de l'accumulateur avec son emballage souple est généralement inférieure à 16 mm, qui est fonction des dimensions et de la chimie des matériaux d'électrodes, et ce sans altérer les performances lors du fonctionnement de l'accumulateur.

Un pack batterie est constitué d'un nombre variable d'accumulateurs pouvant atteindre plusieurs milliers qui sont reliés électriquement en série ou en parallèle entre eux et généralement par des barres de connexion, appelées usuellement busbars.

Dans le développement et la fabrication des batteries lithium-ion, chaque profil/nouvelle demande, quels que soient les acteurs du marché, nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Il est connu, notamment pour augmenter les densités d'énergie, de réaliser des pack-batterie par empilement d'accumulateurs à emballage souple, les bornes de sortie des électrodes (languettes ou « tabs ») étant reliées électriquement en série ou en parallèle les unes avec les autres.

Par ailleurs, les accumulateurs doivent parfois être mis en compression mécanique, afin de maximiser leur durée de vie.

En effet, il est également connu qu'une bonne maitrise d'une force de compression appliquée aux cellules électrochimiques apporte un gain en durée de vie des cellules et du pack-batterie afférent.

Il est également connu qu'il existe une force de compression optimale pour les cellules permettant de maximiser leur durée de vie. Si la force de compression est réduite de 50% par rapport à la force de compression optimale, on constate généralement une hausse du vieillissement de l'ordre également de 50%.

De fait, une compression appliquée sur la plus grande surface active d'une cellule électrochimique limite la délamination de ses couches internes (électrodes, séparateur, couches actives) et donc permet un gain significatif de performances en durée de vie et en fonctionnement nominal.

Selon la forme des accumulateurs, la compression à appliquer revêt plus ou moins d'importance. Dans le cas d'accumulateur à géométrie prismatique avec un emballage souple, il s'avère que la compression peut être primordiale.

Dans le cadre de l'invention, on entend par « accumulateur de géométrie prismatique », un accumulateur de forme globalement prismatique, c'est-à-dire de forme globalement parallélépipédique, aplati selon une dimension, indépendamment de son mode de réalisation qui pourra être par enroulement d'une cellule, par empilement (« stacking »), etc.

Usuellement, la compression est appliquée au moyen de tirants mécaniques qui sont agencés autour des différents accumulateurs empilés par groupe. Le couple de serrage appliqué aux tirants détermine la force de compression appliquée sur les cellules.

Un inconvénient majeur des tirants mécaniques est qu'il est très difficile de maîtriser la force de compression au cours du fonctionnement des accumulateurs du pack-batterie, ainsi qu'au cours de leur vieillissement. En effet, lors de la charge et de la décharge des accumulateurs, et lors de leur vieillissement, ceux-ci ont tendance à subir des variations de volume par gonflement/dégonflement des cellules.

Ce phénomène de gonflement des cellules s'accentue avec leur vieillissement, ce qui entraîne une forte hausse de la force de compression à appliquer. De fait, cela dégrade la durée de vie des cellules et induit un surdimensionnement mécanique et de matière active.

Ainsi, de manière générale, usuellement, pour compenser cette dégradation prévisible, les fabricants conçoivent un pack-batterie surdimensionné pour assurer une performance déterminée en fin de vie. Par exemple, pour une performance en fin de vie d'un pack à 10Ah, typiquement au bout de 10ans, les concepteurs dimensionnent initialement un pack-batterie de 12Ah. Autrement dit, ils prévoient une marge de l'ordre de 20% pour compenser le vieillissement des cellules.

Une autre difficulté inhérente à un assemblage par empilement d'accumulateurs souples est de pouvoir assurer des liaisons électriques fiables entre les bornes d'électrodes (languettes ou « tabs ») des différents accumulateurs empilés sans trop augmenter le poids, ni la complexité de l'assemblage en lui-même

Cette difficulté est d'autant plus accrue que les bornes se présentent sous la forme de languettes flexibles, d'un feuillard métallique de très faible épaisseur, typiquement de 0,2 à 0,4mm.

Généralement, les languettes d'électrode sont connectées les unes aux autres à l'aide de fils, de plaques ou de busbars par soudage. Pour cette raison, les languettes d'électrode sont partiellement pliées, et les plaques ou les busbars sont connectées aux parties pliées des autres languettes d'électrode par soudage, ce qui peut être complexe.

De plus, les pièces connectées peuvent se séparer les unes des autres en raison d'impacts externes, ce qui peut entraîner une augmentation du nombre de produits défectueux.

Enfin, cet assemblage par soudage supprime toute possibilité de remplacer un accumulateur défectueux par un autre au sein de l'empilement ou alors au prix d'un coût déraisonnable.

Plusieurs solutions sont décrites dans la littérature pour réaliser des modules de batterie à empilement d'accumulateurs à emballage souple avec liaisons électriques entre leurs bornes ou pôles.

Le brevet US9023504B1 décrit un module de batterie avec des espaceurs agencés individuellement entre deux accumulateurs adjacents, chaque espaceur comprenant une partie de base en contact surfacique avec l'emballage souple d'un accumulateur, une partie d'aile faisant saillie de la partie de base venant recouvrir au moins partiellement les bords longitudinaux de deux accumulateurs adjacents et enfin une partie de fixation destinée à coupler mécaniquement l'espaceur à un espaceur adjacent. Un tel module présente de nombreux inconvénients. Tout d'abord, tel que dimensionné et agencé, chacun des espaceurs ne protège véritablement un accumulateur que sur une partie de son épaisseur. De plus, compte tenu de la forme de ces espaceurs, il n'y a pas de protection de la partie haute ni de la tranche en partie basse de l'accumulateur. Cela peut être très préjudiciable, sachant qu'en général, l'emballage souple d'un accumulateur est de faible épaisseur, le plus souvent inférieur à 0,2mm. D'autre part, ce brevet US9023504B1 ne prend pas en considération la liaison électrique à prévoir au niveau des languettes (bornes) de l'accumulateur. Ainsi, il n'y a ni mise en position, ni mise en pression des languettes pouvant permettre un mode de connexion électrique favorable des accumulateurs entre eux pour réaliser un assemblage en modules de batterie.

Le brevet EP1834365B1 divulgue un module de batterie à empilement d'accumulateurs à emballage souple, dont les bornes (languettes) sont mises en contact et reliées électriquement entre elles au moyen de boulons qui les traversent. Un tel module présente également de nombreux inconvénients. Il est tout d'abord nécessaire de réaliser au préalable un perçage de chacune des languettes, avec probablement un minimum de précision, ce qui n'est pas aisé compte-tenu de leur épaisseur. En outre, le contact électrique entre languettes est proportionnel à l'effort procuré par le couple de serrage d'un boulon. Ce couple est à doser précisément pour ne pas déformer chacune des plaques de fermeture en face avant et face arrière du module. Enfin, l'effort de mise en compression des languettes par ce serrage de boulons est localisé principalement dans la partie haute du module, i.e. dans la zone des connexions électriques entre languettes.

Le brevet CN105226320B décrit un module de batterie à empilement dans lequel chaque accumulateur est logé dans un support avec ses bornes (languettes) assemblées par soudage à des plots portés par le support. Les inconvénients d'un tel module sont également nombreux. A l'assemblage du module, c'est-à-dire des différents supports d'accumulateurs entre eux, on constate qu'il n'y a pas de mise en compression localisée au niveau des connexions électriques Il y a un montage avec mise en compression des différents étages constitués chacun par un support avec son accumulateur, par l'insertion de longues tiges filetées au travers de fixations de chaque support, chaque fixation étant espacée d'une pièce formant entretoise pour maintenir une épaisseur constante après serrage du module. Cet assemblage nécessite un grand nombre de référence de pièces le plus souvent métalliques qui augmentent considérablement la masse totale du module, et donc nuisent à la densité massique du module.

La demanderesse a également proposé dans la demande de brevet déposée le 15 octobre 2020 sous le n° FR2010587, un module de batterie comprenant une pluralité de supports individuels empilés les uns sur les autres et dans chacun desquels est logé un accumulateur à emballage souple, avec un assemblage mécanique des supports individuels entre eux par des moyens de clipsage/encliquetage positionnés sur les bords longitudinaux de chaque support individuel. Cette solution est intéressante dans bon nombre de configurations. Cependant, dans certaines configurations d'accumulateurs, la tenue mécanique des moyens de clipsage/encliquetage peut ne pas être suffisante ou au prix d'un surdimensionnement. Également, dans certains environnements contraignants en termes d'espace, il s'avère important de rendre apparent à minima toutes les pièces de fixation entre supports d'accumulateurs car cela peut présenter un risque d'accrochage voire de destruction par les autres pièces mécaniques autour. Or, les moyens de clipsage/encliquetage ne répondent pas à cette possibilité.

Le brevet EP 3 985 769 A1 divulgue un autre module de batterie de l'état de la technique.

Il existe ainsi un besoin d'améliorer les modules de batterie à empilement d'accumulateurs à emballage souple, notamment afin de pallier les inconvénients précités.

Le but de l'invention est de répondre au moins en partie à ce besoin.

### Exposé de l'invention

Pour ce faire, l'invention concerne, sous l'un de ses aspects, un module de batterie comprenant :
- une pluralité d'accumulateurs, en particulier de géométrie prismatique, comprenant chacun au moins une cellule électrochimique C formée d'une cathode, d'une anode et d'un électrolyte intercalé entre la cathode et l'anode, et un emballage souple agencé pour contenir avec étanchéité la cellule électrochimique tout en étant traversé par une partie de deux languettes formant les pôles ou bornes qui s'étendent dans le plan de la cellule électrochimique;
- une pluralité de cadres borgnes, allongés selon une direction longitudinale (X) et latérale (Y), chaque cadre borgne formant un support avec logement d'un de la pluralité d'accumulateurs, les supports étant empilés et fixés les uns sur les autres selon une direction d'empilement (Z) orthogonale aux directions (X,Y), chaque support comprenant intérieurement, le long d'un de ses bords longitudinaux et/ou latéraux, des moyens de liaison mécanique avec au moins un support adjacent;
- une pluralité de paires de barrettes métalliques, chaque barrette métallique d'une paire étant insérée dans un logement ménagé dans un des bords latéraux et/ou longitudinaux d'un des supports pour former une cosse, une portion de chaque cosse étant en contact avec un pôle ou borne d'un des accumulateurs.

Selon l'invention, le module comprend une paire de plaquettes métalliques formant chacune un busbar qui s'étend selon la direction d'empilement (Z), chaque busbar étant soudée à l'une des cosses de chaque paire de cosses, chaque busbar comprenant au moins une zone amincie formant une ligne de rupture dont au moins une est agencée en regard de l'un et/ou l'autre de deux cadres borgnes adjacents, chaque ligne de rupture étant dimensionnée pour rompre en cas de gonflement au-delà d'un volume prédéterminé d'un accumulateur dans l'un et/ou l'autre de deux cadres borgnes adjacents de sorte à interrompre le courant électrique circulant dans le module.

Avantageusement, chaque busbar comprend une pluralité de zones amincies formant chacune une ligne de rupture.

Selon un mode de réalisation avantageux, au moins une partie des moyens de liaison mécanique est agencée sur un bord des cadres borgnes, opposé à celui sur lequel le busbar est agencé. Ainsi, en cas de gonflement d'accumulateur conduisant à dépasser le volume prédéterminé, la partie des moyens de liaison mécanique produit un effet de levier mécanique qui va accentuer l'effort de rupture au niveau d'une ligne amincie.

De préférence, le volume prédéterminé correspond à un emballement thermique de l'accumulateur.

En ce qui concerne le phénomène d'emballement thermique, on se reportera à la publication [1] et au protocole décrit dans cette publication. Les températures dites «d'auto-échauffement» et « d'emballement thermique » sont respectivement notées T1 et T2 dans cette publication.

La température T1, typiquement 70°C, dans la figure 2 de la publication, est la température à partir de laquelle l'accumulateur s'échauffe sans source externe à une vitesse typique de 0,02 °C/min en conditions adiabatiques.

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

De préférence, lorsque les accumulateurs logés dans deux cadres borgnes adjacents sont connectés électriquement par un busbar, alors le busbar comporte au moins une zone amincie formant au moins une ligne de rupture.

Selon une variante de réalisation avantageuse, chaque busbar comprend un nombre N-1 de lignes de rupture pour un nombre N de cadres borgnes empilés.

Selon un mode de réalisation avantageux, le module comprend des moyens de maintien d'écartement des parties séparées de busbar de part et d'autre après rupture de la zone amincie. Ces moyens de maintien d'écartement empêchent toute possibilité de reconnexion électrique entre accumulateurs au sein du module puisque les parties séparées de l'un ou des deux busbars sont maintenues physiquement à distance l'une de l'autre après rupture de la zone amincie de busbar.

Selon une première variante avantageuse, les moyens de maintien d'écartement comprennent :
- un ou plusieurs ergots, agencés chacun sur une face d'un cadre borgne ;
- un ou plusieurs évidements, notamment des rainures, agencés chacun sur une face d'un cadre borgne adjacent, en regard de la face du cadre borgne sur laquelle sont agencés le ou les ergots de sorte qu'avant rupture de la zone amincie chaque ergot est logé dans un évidement, notamment une rainure et qu'après rupture de la zone amincie, chaque ergot est dégagé de l'évidement, notamment la rainure, et en appui contre la face du cadre borgne adjacent en définissant un espace d'écartement entre les parties séparées de busbar.

Avantageusement, le module comprend au moins un ergot agencé sur le bord de chaque logement de cosse.

Selon une deuxième variante avantageuse, qui peut se cumuler avec la première, les moyens de maintien d'écartement comprennent une ou plusieurs lames élastiquement déformables, en matériau isolant électrique, agencées sur le bord longitudinal ou latéral d'un cadre borgne en regard du busbar, de sorte qu'avant rupture de la zone amincie, chaque lame à l'état déformé est en appui contre le busbar, et qu'après rupture de la zone amincie, au moins une partie de chaque lame à l'état non déformé est insérée entre les parties séparées de busbar en définissant l'espace d'écartement entre elles.

Avantageusement, la distance entre deux lignes de rupture de chaque busbar est sensiblement égale à l'épaisseur d'un cadre borgne.

Avantageusement encore, la ligne de rupture de chaque busbar étant agencée sensiblement alignée avec la jointure entre deux cadres borgnes adjacents.

Avantageusement encore, l'épaisseur de ligne de rupture est comprise entre 100 et 200 µm. Avantageusement encore, l'épaisseur de la partie de busbar adjacente à une ligne de rupture est comprise entre 0,8 et 1mm.

Le matériau constitutif de chaque busbar est de préférence choisi parmi l'aluminium et le cuivre. Ces matériaux présentent une bonne conductivité électrique et son compatibles avec matériaux le plus souvent utilisés pour les cosses.

L'aluminium constitue un matériau privilégié pour les cosses du module, pour les raisons suivantes :
- il présente une faible densité, typiquement une masse volumique de 2,7 g/cm³ plus faible que celle du cuivre ou du nickel, qui est 8,9 g/cm³. Cela permet un gain de masse significatif pour chaque sous-ensemble du module de batterie, constitué d'un support équipé de deux cosses ;
- il présente une très bonne conductivité électrique : à masse égale au cuivre, l'aluminium présente une conductivité électrique deux fois supérieure ;
- il est facilement soudable par un procédé de soudage laser. On peut ainsi envisager d'utiliser des busbars à ligne de rupture en aluminium qui seront soudés en direct sur les cosses en aluminium du module selon l'invention.

L'aluminium du busbar est de préférence de série 1000 de préférence selon les duretés H14,H18,H24. Cette nuance d'aluminium présente de bonnes caractéristiques de résistance à la rupture et d'allongement à la rupture.

Un busbar peut être réalisé par usinage ou par outil de découpe sous presse.

Selon un mode de réalisation avantageux, chaque support comprend intérieurement, le long d'un de ses bords longitudinaux et/ou latéraux, en tant que moyens de fixation/liaison mécanique des supports entre eux, des moyens de liaison par complémentarité de formes avec au moins un support adjacent; les moyens de liaison étant agencés de sorte à ne pas faire saillie à l'extérieur de l'empilement une fois les liaisons réalisées.

Des moyens de liaison par complémentarités de formes positionnés le long des bords longitudinaux de chaque support individuel permettent d'obtenir une liaison mécanique robuste. Ainsi, chaque support individuel intègre par définition la fonction de fixation par serrage pour se raccorder à un autre support individuel.

La fermeture entre deux supports adjacents est ainsi obtenu par un unique mouvement de translation qui permet l'engagement des formes complémentaires entre elles.

Des moyens de blocage, également par formes complémentaires, agencés sur les bords latéraux des supports d'accumulateurs viennent verrouiller en quelque sorte la fermeture réalisée.

On rappelle ici que le sens usuel qui est celui l'invention, donné à une liaison par complémentarités de formes : les formes géométriques des pièces sont complémentaires et assurent la liaison directe entre elles.

On précise que l'expression « chaque support comprenant intérieurement » signifie la portion intérieure borgne du support.

L'expression « contact avec pression » signifie un contact mécanique avec une pression appliquée.

Avantageusement, le module est configuré de sorte que les bords longitudinaux du module forment une surface plane une fois les liaisons réalisées.

Selon un mode de réalisation avantageux, les moyens de liaison par complémentarité de formes comprennent, pour chaque support:
- une pluralité de crans répartis à distance les uns des autres le long d'au moins un des bords longitudinaux d'une des faces principales du support;
- une pluralité de créneaux répartis à distance les uns des autres le long d'au moins un des bords longitudinaux de l'autre des faces principales du support, de telle sorte qu'un coulissement longitudinal relatif entre deux supports adjacents, provoque l'engagement de chaque cran d'un bord longitudinal dans un créneau d'un bord longitudinal en définissant une position de fermeture des deux supports.

Selon ce mode et une variante de réalisation avantageuse, les moyens de liaison par complémentarité de formes comprennent, pour chaque support:
- au moins un cran agencé sur un des bords latéraux d'une des faces principales du support;
- au moins un créneau agencé sur un des bords latéraux de l'autre des faces principales du support, de telle sorte que lors du coulissement longitudinal relatif entre deux support adjacents, le cran d'un bord latéral support vient s'engager dans un créneau latéral dans la position de fermeture des deux supports.

Selon une autre variante de réalisation avantageuse, chaque cosse et/ou chaque support est(sont) configuré(e)(s) pour absorber les déplacements induits par la liaison par complémentarité de formes entre supports adjacents de sorte à garantir une pression de contact de la portion de chaque cosse contre un pôle ou borne d'un des accumulateurs et par là garantir le contact électrique permanent entre les bornes ou pôles et les cosses terminales dans l'empilement.

Pour garantir cette pression de contact, la partie du support en regard et/ou la portion de chaque cosse en contact avec un pôle ou borne d'un des accumulateurs comprennent avantageusement un ou plusieurs bossages.

Pour une application Li-ion, chaque accumulateur peut être un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe des composés d'intercalation/insertion de type LiMO₂ avec M représentant Co, Ni ou Mn ; LiM'₂O₄ avec M' représentant Ni ou Mn ; LiM"PO₄ avec M" représentant Fe, Co, Mn ou Ni.

L'invention a encore pour objet un pack-batterie comprenant au moins deux modules de batterie tels que décrits précédemment, reliés électriquement entre eux au moyen d'au moins un busbar soudé sur au moins une partie des cosses, à l'extérieur de l'empilement du module.

Ainsi, l'invention consiste essentiellement à définir un module de batterie comprenant une pluralité de supports individuels empilés les uns sur les autres et dans chacun desquels est logé un accumulateur à emballage souple (« pouch »), chaque support logeant des barrettes métalliques formant des paires de cosses qui viennent réaliser individuellement une liaison électrique par contact de préférence avec pression avec une borne (languette) d'un des accumulateurs.

Selon l'invention, une des cosses de toutes les paires est soudée directement à une plaquette métallique formant un busbar qui comprend des zones avec un affaiblissement (zones de moindre épaisseur) par ligne de prédécoupe aussi appelée ligne de rupture. On prévoit une ligne de rupture entre deux cadres borgnes-support de sorte que chaque gonflement néfaste de n'importe quel accumulateur au sein du module génère une rupture d'un busbar et donc le sépare en au moins deux parties qui ne plus reliées mécaniquement et électriquement.

Ainsi, un busbar selon l'invention à plusieurs zones amincies formant des lignes de rupture forme un dispositif d'interruption de courant du module.

Autrement dit, lorsqu'un accumulateur va gonfler de manière anormale sous l'effet de la montée en pression interne, notamment en cas d'emballement thermique, les parois d'un cadre borgne-support qui contient cet accumulateur vont se déformer et ce cadre support va s'écarter de celui adjacent au sein du module.

Cet écartement par déformation mécanique va provoquer des contraintes mécaniques dans l'épaisseur du busbar générant ainsi une rupture nette de la zone amincie concernée.

Les parties du busbar étant physiquement séparées, il y a une interruption irréversible du passage du courant à l'intérieur du module, qui ne peut donc plus être ni chargé ni déchargé électriquement.

Au final, l'invention apporte de nombreux avantages parmi lesquels on peut citer:
- des busbars à lignes de rupture, au sein d'un module d'accumulateurs à cadres borgnes empilés et assemblés entre eux, qui assurent une fonction de dispositif d'interruption de courant (CID) fiable et rapide quel que soit l'accumulateur dès qu'un volume de gonflement anormal, notamment correspondant à un emballement thermique, apparaît ;
- la garantie d'une déconnexion électrique totale du module en cas d'emballement thermique de n'importe quel de ses accumulateurs;
- la sécurisation possible de la déconnexion électrique par des moyens de maintien de l'écartement entre partie de busbar séparées, qui peuvent être uniquement mécaniques, simples à mettre en œuvre et fiables.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion.
[Fig 2] la figure 2 est une vue de face montrant un accumulateur lithium-ion de format prismatique avec son emballage souple selon l'état de l'art.
[Fig 3] la figure 3 est une vue en perspective d'un accumulateur lithium-ion de format prismatique avec son emballage souple selon l'état de l'art.
[Fig 4] la figure 4 est une vue en en perspective d'une partie d'un module de batterie selon l'invention, avant assemblage et après assemblage entre deux cadres borgnes formant des supports dans lesquels sont logés individuellement des accumulateurs.
[Fig 5] la figure 5 est une reproduction photographique montrant l'empilement et l'assemblage par liaison à complémentarités de formes d'une pluralité de supports avec les accumulateurs logés pour la réalisation d'un module de batterie selon l'invention.
[Fig 6] la figure 6 est une vue en perspective montrant une face principale d'un support de module de batterie selon l'invention.
[Fig 7] la figure 7 est une vue en perspective montrant l'autre face principale d'un support de module de batterie selon l'invention.
[Fig 8A] la figure 8A est une vue en perspective montrant une étape préalable d'assemblage entre deux supports logeant des accumulateurs d'un module de batterie selon l'invention.
[Fig 8B] la figure 8B est une vue en perspective montrant l'étape préalable d'assemblage entre deux supports logeant des accumulateurs d'un module de batterie selon l'invention.
[Fig 8C] la figure 8C est une vue en perspective montrant l'étape d'assemblage entre deux supports logeant des accumulateurs d'un module de batterie selon l'invention.
[Fig 8D] la figure 8D est une vue en perspective montrant l'assemblage finalisé entre deux supports logeant des accumulateurs d'un module de batterie selon l'invention.
[Fig 8E] la figure 8E est une vue en perspective montrant l'assemblage finalisé entre deux supports logeant des accumulateurs d'un module de batterie selon l'invention, une fois la soudure des busbars conformes à l'invention réalisée sur les cosses du module.
[Fig 9] la figure 9 est une vue de détail en perspective de montrant les busbars d'un module de batterie selon l'invention.
[Fig 10] [Fig 10A] les figures 10 et 10A sont des vues respectivement de dessus et en coupe longitudinale selon A-A d'un busbar d'un module de batterie selon l'invention, sans rupture de ses zones amincies.
[Fig 11A] [Fig 11B] les figures 11A et 11B sont des vues d'une simulation numérique de déformation d'un cadre-support, respectivement de sa face avant sa face arrière, d'un module de batterie selon l'invention, susceptible d'entraîner la rupture d'une zone amincie d'un busbar.
[Fig 12] [Fig 12A] les figures 12 et 12A sont des vues respectivement de dessus et en coupe longitudinale selon A-A d'un busbar d'un module de batterie selon l'invention, avec rupture de l'une de ses zones amincies.
[Fig 13] [Fig 14] [Fig 15] les figures 13, 14 et 15 sont des vues de détail en perspective montrant des ergots avec leurs rainures, en tant que moyens de maintien d'écartement de parties d'un busbar d'un module de batterie selon l'invention, une fois la rupture de l'une de ses zones amincies réalisée.
[Fig 16A] [Fig 16B] les figures 16A et 16B sont des vues en coupe longitudinale montrant une lame élastiquement déformable, en tant que moyen de maintien d'écartement de parties d'un busbar d'un module de batterie selon l'invention, respectivement avant et une fois la rupture de l'une de ses zones amincies réalisée.
[Fig 17] la figure 17 est une vue en perspective montrant un module de batterie selon l'invention, avec une configuration de mise en série électrique des accumulateurs dont les bornes de sortie sont agencées sur un même bord latéral, par les busbars selon l'invention.
[Fig 18] la figure 18 est une vue en perspective montrant un module de batterie selon l'invention, avec une configuration de mise en parallèle électrique des accumulateurs dont les bornes de sortie sont agencées sur deux bords latéraux opposés, par les busbars selon l'invention.
[Fig 19] la figure 19 reprend la figure 18 et montre l'amenée du courant au moyen de clinquants ou feuillards métalliques depuis une borne de sortie jusqu'à la cosse soudée à un busbar selon l'invention.
[Fig 20] la figure 20 est une vue en perspective montrant un module de batterie selon l'invention, avec une configuration de mise en série électrique des accumulateurs dont les bornes de sortie sont agencées sur deux bords latéraux opposés, avec l'amenée du courant au moyen de clinquants ou feuillards métalliques depuis une borne de sortie jusqu'à la cosse soudée à un busbar selon l'invention.

### Description détaillée

Les figures 1 à 3 sont relatives à des exemples différents d'accumulateur Li-ion, d'emballages souples selon l'état de l'art. Ces figures 1 à 3 ont déjà été commentées en préambule et ne le sont donc pas plus ci-après.

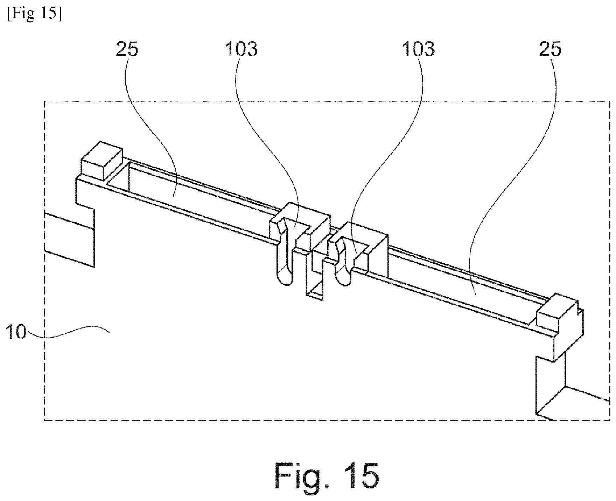

Par souci de clarté, les mêmes références désignant les mêmes éléments selon l'état de l'art et selon l'invention sont utilisées pour toutes les figures 1 à 20.

Dans l'ensemble de la présente demande, les termes « inférieur », « supérieur », « bas », « haut », « dessous » et « dessus » sont à comprendre par référence par rapport à un module de batterie selon l'invention avec des accumulateurs Li-ion positionnés à l'horizontale.

De même, les termes « longitudinaux » et « latéraux » sont à considérer par rapport à la direction longitudinale X selon laquelle un support d'accumulateur conforme à l'invention est allongé.

Dans les exemples illustrés ci-après, les accumulateurs A1 à AN illustrés sont de format prismatique, à emballage souple 6, usuellement appelés « pouch ».

Les accumulateurs A1 à AN peuvent être reliés électriquement en série et/ou en parallèle dans un module selon l'invention. Le montage en série et/ou en parallèle électrique est fonction de l'orientation des accumulateurs.

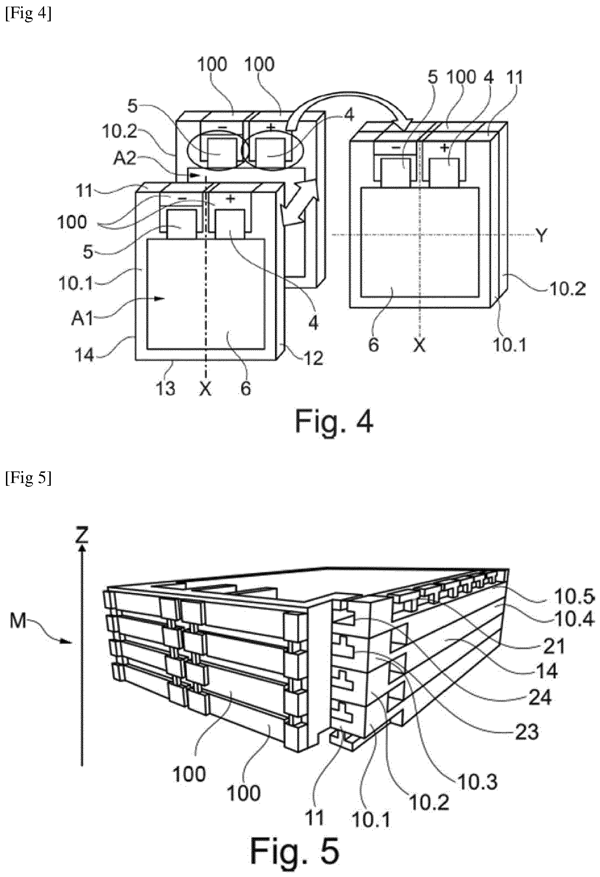

On a représenté en figure 4, un exemple d'une partie de module de batterie M conforme à l'invention comprenant plusieurs accumulateurs adjacents A1, A2, ..AN.

Chaque accumulateur A1, A2 ..AN, est logé dans un cadre borgne 10.1, 10.2, ..10N, allongé selon une direction longitudinale (X) et selon une direction latérale (Y), qui forme ainsi un support de l'accumulateur.

Chacun des supports 10.1, 10.2 , ..10N, est de forme générale parallélépipédique rectangle avec deux bords latéraux 11, 13 reliés entre eux par deux bords longitudinaux 12, 14 parallèle à la direction longitudinale (X).

Les supports 10.1, 10.2 , ..10N, sont empilés les uns sur les autres, de préférence en étant emboités au moins partiellement les uns dans les autres, selon une direction d'empilement (Z) orthogonale aux directions (X) et (Y).

Chacun des supports 10.1, 10.2 , ..10N, est fixé au(x) support(s) adjacent(s) par des moyens de liaison par complémentarité de formes 2, agencés sur au moins un des bords longitudinaux 12, 14 de chaque support. Ces moyens de clipsage/encliquetage 2 permettent d'obtenir des liaisons mécaniques robustes entre les différents supports empilés.

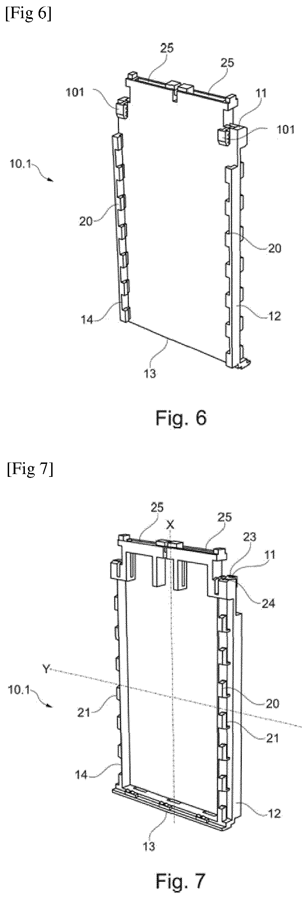

Plus précisément, comme montré aux figures 6 et 7, chaque support 10.1 intègre :
- une pluralité de crans 20 répartis à distance les uns des autres le long de chacun des bords longitudinaux 12, 14 d'une des faces principales du support;
- une pluralité de créneaux 21 répartis à distance les uns des autres le long de chacun des bords longitudinaux 12, 14 de l'autre des faces principales du support.

De préférence, ces crans 20 et ces créneaux 21 sont configurés respectivement en tenons et mortaises de sorte à constituer des liaisons à queue d'aronde.

L'agencement relatif entre les crans 20 et créneaux 21 est réalisé de telle sorte qu'un coulissement longitudinal relatif entre deux supports adjacents 10.1, 10.2 ..., provoque l'engagement de chaque cran 20 dans un créneau 21 en définissant une position de fermeture des deux supports 10.1, 10.2 ...

Autrement dit, les crans 20 de la face principale inférieure de l'accumulateur 10.2 du dessus viennent s'engager individuellement par coulissement selon l'axe longitudinal X dans les créneaux 21 de la face principale supérieure de l'accumulateur 10.1 du dessous.

Comme montré également, la construction et l'agencement relatif entre crans 20 et créneaux définit une course de coulissement L de longueur limitée par rapport à la longueur hors-tout des accumulateurs A1, A2, ...et des cadres-support 10.1, 10.2...On évite ainsi d'endommager les accumulateurs et leurs connectiques 4, 5 lors de l'assemblage du module.

Pour bloquer la fermeture entre supports 10.1, 10.2...on prévoit en outre en tant que moyens supplémentaire de liaison 2 :
- au moins un cran 23 agencé sur un des bords latéraux 11, 13 d'une des faces principales du support;
- au moins un créneau 24, sous la forme d'une rainure, agencé sur un des bords latéraux 11, 13 de l'autre des faces principales du support.

L'agencement relatif entre les crans 23 et rainures 24 est réalisé de telle sorte que lors du coulissement longitudinal relatif entre deux support adjacents 10.1, 10.2, le cran 23 vient s'engager dans une rainure 24 dans la position de fermeture des deux supports.

Autrement dit, concomitamment à la fermeture sur les bords longitudinaux 13, 14 entre supports adjacents 10.1, 10.2, le blocage de cette fermeture est réalisé par l'insertion des crans 23 dans les rainures 24.

De préférence, à l'instar des crans 20 et créneaux 21, les crans 23 et rainures 24 sont configurés respectivement en tenons et mortaises de sorte à constituer des liaisons à queue d'aronde. On peut par exemple prévoir une section en T ou en trapèze pour réaliser ces liaisons à queue d'aronde.

Avantageusement, tous les moyens de liaison 20 à 24 sont agencés de sorte à ne pas faire saillie à l'extérieur de l'empilement une fois les liaisons réalisées.

Autrement dit, lorsque les liaisons par complémentarités de forme sont réalisées, tous les longitudinaux 13, 14 forment une même surface plane, lisse. Il en va de même avec les bords latéraux 11, 13.

Ainsi, une fois le module M assemblé, il n'y a pas de risque d'accrocher inopinément voire dégrader les moyens de liaison 2 car ils ne sont pas accessibles depuis l'extérieur du module.

Chacun des supports 10.1, 10.2 , ..10N, 10N forme avec les moyens de liaison 2 une seule pièce monolithique en matériau plastique isolant électrique. Un support peut par exemple être en polyétherimide (PEI), en acrylonitrile butadiène styrène (ABS), en polyamide (PA) ou en acide polylactique (PLA). Le procédé de réalisation privilégié est l'impression 3D. Les matériaux imprimables par 3D sont généralement de type : PLA, ABS, PA12, etc...Il est cependant tout à fait possible de réaliser ces pièces par usinage, et les matériaux utilisés seraient de type : POM C, Delrin (POM), FR4, PEEK, etc...

Pour assurer les liaisons électriques entre les différents accumulateurs A1- AN d'un même module de batterie M, chaque support 10.1, 10.2 , ..10N comporte une paire de fentes 25 dans chacune desquelles vient s'insérer une barrette métallique 100 pour former une paire de cosses que l'on peut également désigner comme cosses terminales ou de sortie.

Dans l'empilement du module M, une portion de chaque cosse 100 est en contact avec pression contre un pôle ou borne 4, 5 d'un des accumulateurs A1 à AN. Une autre portion de chaque cosse 100 est soudée avec une plaquette métallique formant un busbar 200 selon l'invention, détaillé par la suite. Ainsi, la continuité électrique est assurée entre tous les accumulateurs A1 à AN.

Avantageusement, toutes les cosses 100 sont identiques entre elles au sein d'un même module de batterie, c'est-à-dire de mêmes dimensions et réalisées dans le même matériau. De préférence, ces cosses sont en aluminium.

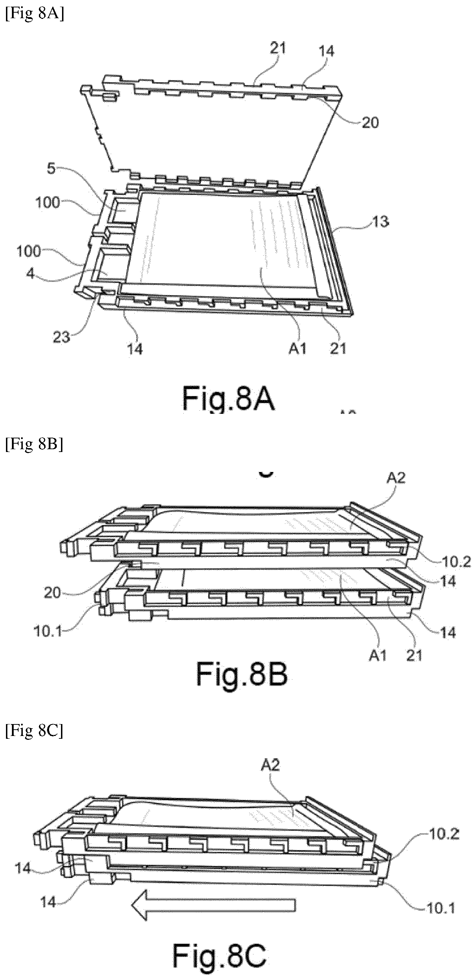

On récapitule maintenant en référence aux figures 8A à 8E l'assemblage par complémentarités de formes entre supports adjacents puis soudage d'une paire de busbars 200 afin de constituer un module de batterie selon l'invention.

Etape i/ : on insère une paire de barrettes formant cosses 100 dans les fentes 25 de chaque support 10.1, 10.2 prévues à cet effet, de sorte à ce que ces cosses 100 soient maintenues.

Etape ii/ : on vient loger chaque accumulateur A1, A2,... dans un support donné 10.1, 10.2... en positionnant les bornes de sortie (languettes) 4, 5 de chaque accumulateur en regard de la paire de cosse 100 (figure 8A).

Etape iii/ : on procède alors à l'empilement par coulissement relatif le long de leurs bords longitudinaux 12, 14 entre les supports adjacents 10.1, 10.2... jusqu'à réaliser les liaisons par complémentarité de formes entre eux.

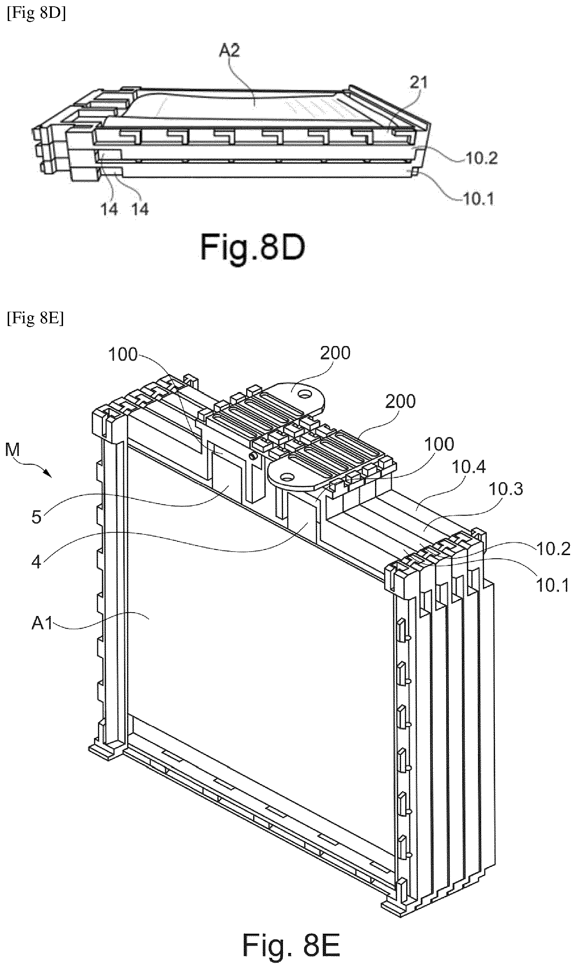

Plus précisément, on amène un support 10.2 en regard d'un support adjacent 10.1 (figures 8A, 8B) puis on vient les faire coulisser relativement l'un par rapport à l'autre (figure 8C) de sorte que les crans 20 s'engagent dans les créneaux 21 selon la course de translation prédéfinie L. Les supports 10.1, 10.2 sont ainsi fermés et leurs bords longitudinaux 13 ou 14 forment une seule surface plane (figure 8D).

Simultanément, les crans 23 s'engagent dans les rainures 24 et bloquent ainsi la fermeture entre supports adjacents 10.1, 10.2...

L'assemblage mécanique entre l'ensemble des cadre-borgnes formant les supports adjacents 10.1, 10.2...est ainsi finalisé.

Autrement dit, l'assemblage par empilement et fixation par coulissement du module est achevé (figure 8D).

A l'intérieur des supports 10.1, 10.2, 10.3, 10.4, la fermeture par coulissement entre supports a provoqué la mise en contact avec pression entre les portions des cosses 100 et les languettes 4, 5 formant les bornes de sortie.

Etape iv/: on approche chaque plaquette métallique 200 formant un busbar en regard d'une rangée de cosses 100.

Plus précisément, le positionnement de chaque busbar 200 est réalisé de sorte à plaquer la partie principale 201 d'un busbar contre les parties planes du dessus des cosses 100. Puis on procède au soudage de préférence par laser entre chaque busbar 200 et une rangée de cosses 100. Le soudage laser est de préférence réalisé sous la forme de plusieurs points (au moins deux) pouvant former une ligne continue ou discontinue. La taille des points de soudure est définie de façon à garantir une résistance mécanique ( en traction et en cisaillement) de la liaison soudée entre busbar 200 et cosse 100 toujours d'un niveau supérieur à la tenue mécanique de la ligne de rupture 202 dans la partie amincie du busbar. Cette soudure permet également le passage du courant des différentes cellules à travers le busbar.

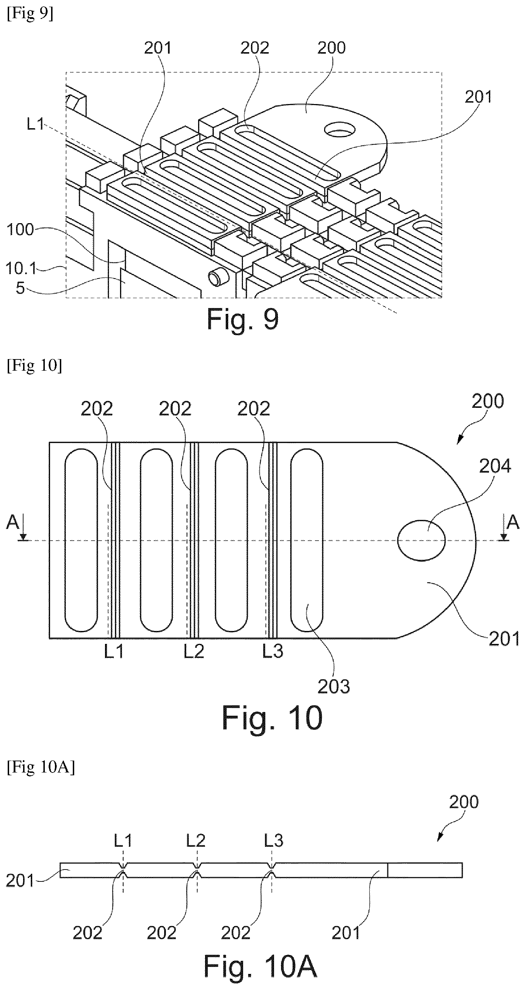

Le module assemblé est donc prêt à l'usage, c'est-à-dire prêt à fonctionner électriquement (figures 8E, 9).

Comme montré aux figures 10 et 10A, chaque plaquette métallique 200 comprend une partie principale 201 qui définit l'épaisseur principale ainsi que des zones amincies 202. Ces zones amincies 202 forment des lignes de rupture L1, L2, L3 séparées l'une de l'autre par la partie principale 201.

L'épaisseur d'une ligne de rupture L1, L2, L3 peut être comprise entre 100 et 200 µm pour une épaisseur de la partie principale 201 comprise entre 0,8 et 1mm.

Le matériau constitutif de chaque busbar est avantageusement de l'aluminium, de préférence de série 1000, de préférence encore selon les duretés H14,H18,H24.

La partie principale 201 peut comprendre des évidements de matière 203 pour l'alléger mais qui ne constituent nullement des lignes de rupture.

Un busbar 200 peut également comprendre un œillet 204 pour la connexion électrique du module vers l'extérieur.

La distance entre deux lignes de ruptures L1, L2, L3 adjacentes correspond à une épaisseur de cadre-support 10.1 à 10.N dans la direction d'empilement Z.

Le positionnement de chaque busbar 200 avant son étape de soudure à une rangée de cosses 100 est réalisé judicieusement de sorte à faire coïncider une zone amincie 202 en regard de l'interface entre deux cadres-supports 10.1 à 10N adjacents.

Selon l'invention, chaque ligne de rupture 202 est dimensionnée pour rompre en cas de gonflement au-delà d'un volume prédéterminé, correspondant à un emballement thermique d'un accumulateur A1 à An.

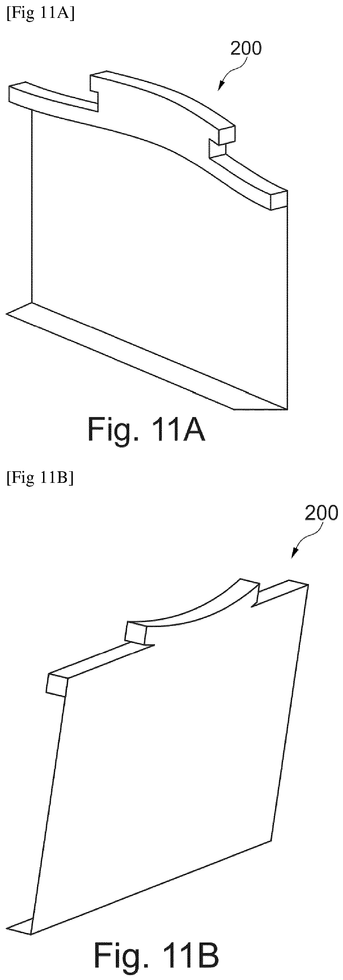

Les figures 11A et 11B montrent une simulation numérique de la déformée d'un cadre-support 10.1 qu'il subit en cas d'emballement thermique de l'accumulateur A1 qu'il loge. Cette déformation induit la rupture d'une ligne L1 du busbar 200, ce qui interrompt le courant électrique circulant dans le module.

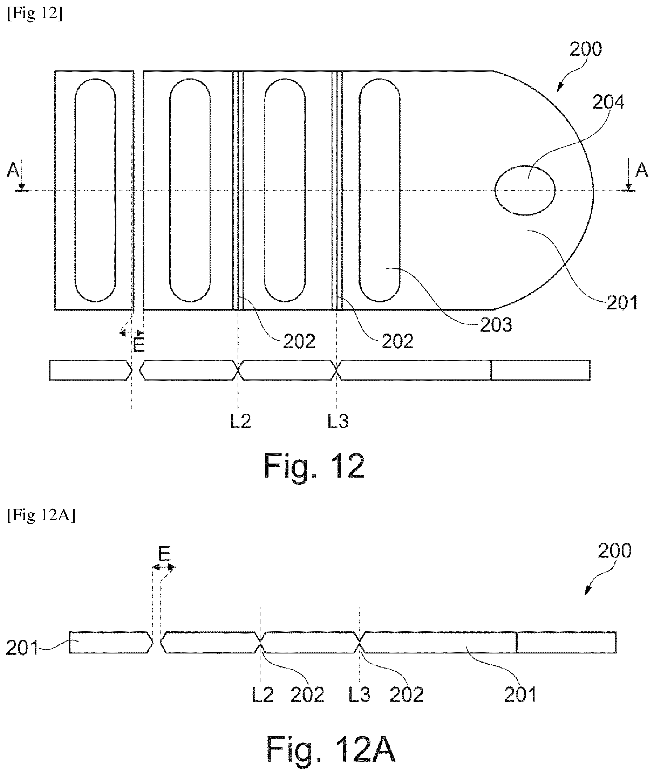

Les figures 12 et 12A montrent un busbar 200 ayant subi une rupture au niveau de sa ligne L1. Comme visible, les parties 201 de busbar sont séparées selon un écartement E physique qui empêche la continuité électrique dans le busbar et donc le courant de circuler dans le module M.

Pour garantir à coup sûr de maintenir cet écart E et donc toute reconnexion électrique au sein du module, on prévoit des moyens mécaniques de maintien d'écartement.

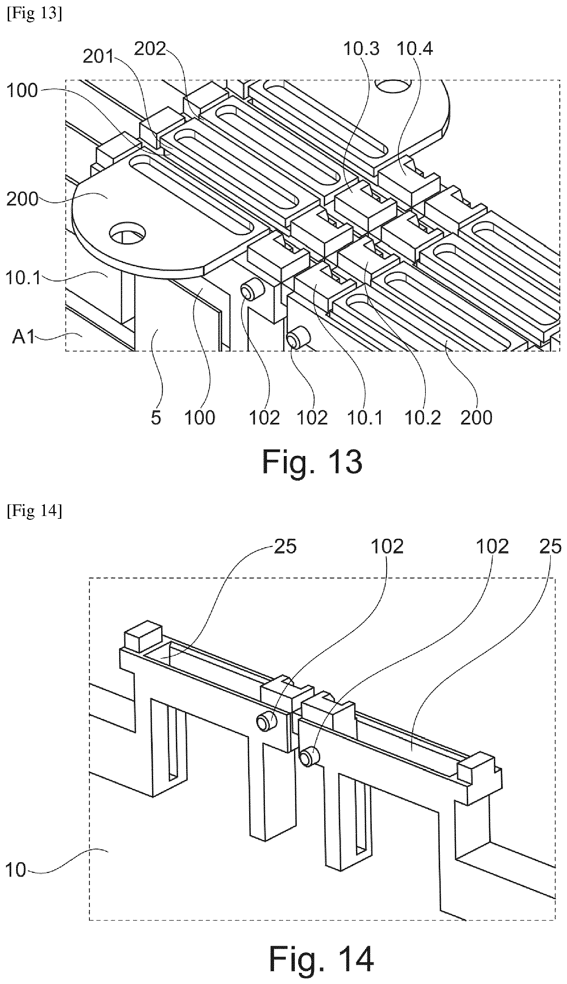

Les figures 13 à 15 illustrent une première variante selon laquelle les moyens d'écartement consistent en
- un ergot 102 agencé sur le bord de chaque logement 25 de cosse d'un cadre borgne 10.1;
- une rainure 103, agencée sur une face d'un cadre borgne adjacent 10.2, en regard de chaque bord supportant un ergot 102.

Avant rupture d'une zone amincie, un ergot 102 est logé dans la rainure 103 correspondante et après rupture de la zone amincie, chaque ergot 102 dégagé de cette dernière et, du fait de la déformation du cadre 10.1 consécutive au gonflement de l'accumulateur A1 qu'il loge, vient en appui à côté de la rainure 103 contre la face du cadre borgne adjacent 10.2. La longueur de l'ergot 102 définit l'espace d'écartement E entre les parties séparées 201 de busbar.

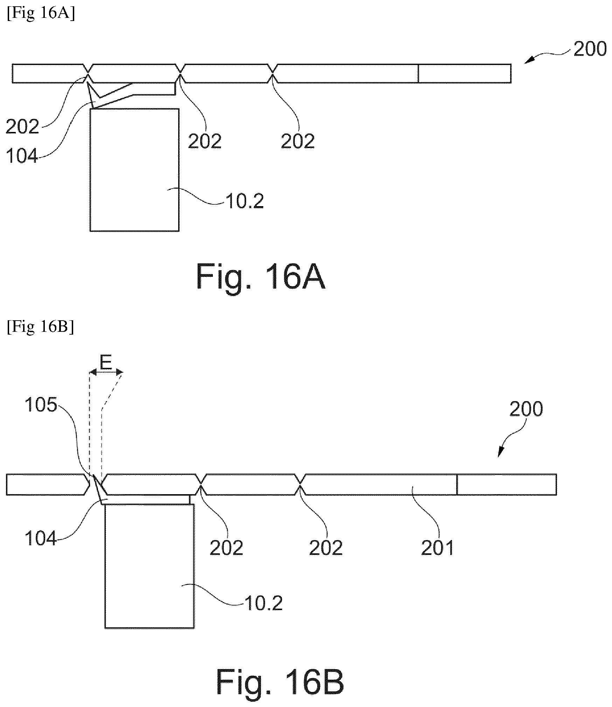

Les figures 16A et 16B montrent une deuxième variante consistant en au moins une lame élastiquement déformable 104, en matériau isolant électrique, agencée sur le bord latéral d'un cadre borgne 10.2 en regard du busbar 200.

Avant rupture de la zone amincie L1, la lame 104 à l'état déformé est en appui contre le busbar 200 avec sa pointe 105 qui reste de préférence inscrite dans l'épaisseur du support 10.2 (figure 16A).

Après la rupture de la zone amincie, la pointe 105 de la lame 104 à l'état non déformé est insérée entre les parties séparées 201 de busbar en définissant l'espace d'écartement entre elles (figure 16B). Autrement dit, la rupture de la ligne L1 a relevé la pointe 105 du fait de la déflexion de la lame 104, et ce au-dessus du plan médian du busbar 200, pour assurer une séparation mécanique et électrique entre les deux parties 201 du busbar 200.

Différentes configurations d'agencement de bornes de sortie 4, 5 d'accumulateur ainsi que de mises en série ou parallèle électrique des différents accumulateurs sont possibles dans le cadre de l'invention.

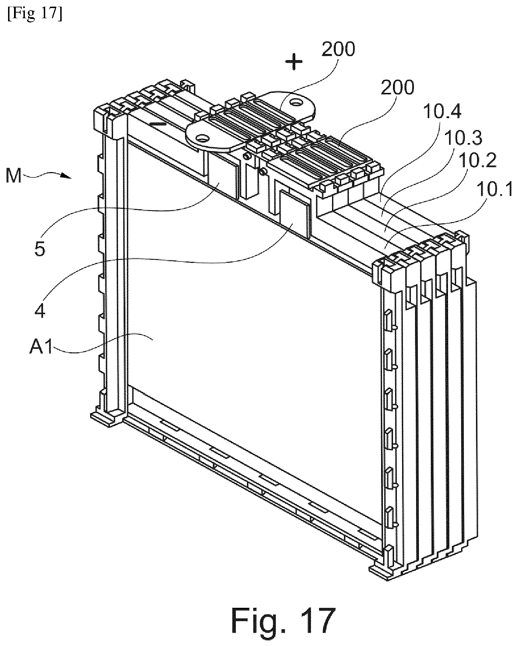

La figure 17 illustre un module M selon une configuration de connexion en série avec des accumulateurs A1 à AN dont les languettes de sortie 4, 5 sortent sur un même bord latéral. Dans ce module, l'arrêt du passage du courant s'effectue dès la rupture d'une seule ligne de rupture L1 à L3 d'un des deux busbars 200 de mise en série. Egalement, comme détaillé précédemment, les deux busbars 200 sont positionnés sur un bord latéral supérieur du module M qui n'est pas bridé mécaniquement, puisque seuls les autres bords sont bridés mécaniquement entre eux par les liaisons mécaniques. Ainsi, en cas de gonflement néfaste d'au moins un accumulateur A1 à AN, l'écartement entre les cadres supports 10.1 à 10N va être privilégié sur le bord latéral du côté du busbar et donc induire la ligne L1 à L3.

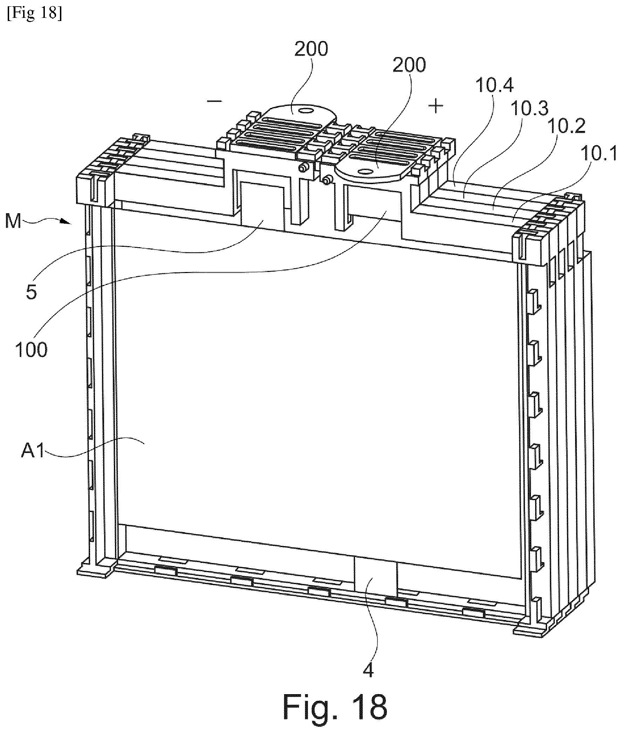

La figure 18 illustre un module M selon une configuration de connexion en parallèle avec des accumulateurs A1 à AN dont les languettes de sortie 4, 5 sortent sur deux bords latéraux opposés. Dans ce module, l'arrêt du passage du courant s'effectue dès la rupture simultanée d'une ligne de rupture L1 à L3 des deux busbars 200 de mise en parallèle. Egalement, comme détaillé précédemment, les deux busbars 200 sont positionnés sur un bord latéral supérieur du module M qui n'est pas bridé mécaniquement, puisque seuls les autres bords sont bridés mécaniquement entre eux par les liaisons mécaniques. Ainsi, en cas de gonflement néfaste d'au moins un accumulateur A1 à AN, l'écartement entre les cadres supports 10.1 à 10N va être privilégié sur le bord latéral du côté du busbar et donc induire la ligne L1 à L3.

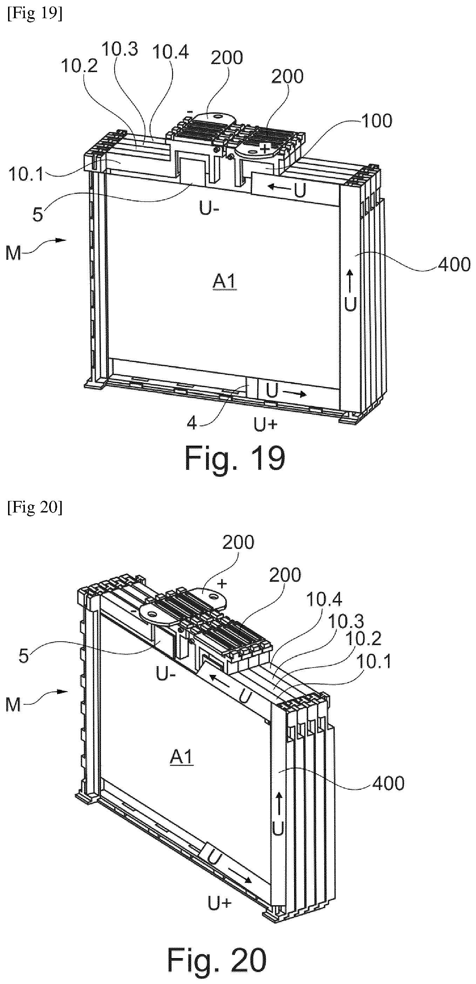

Les figures 19 et 20 illustrent des clinquants métalliques 400 agencés de sorte faire la remontée de courant d'une languette de sortie 4 d'accumulateur au niveau d'une cosse 100 sur le bord latéral opposé du module.

Chaque clinquant 400 peut être une piste conductrice (piste imprimée, liaison par feuillard métallique Cu,Ni,Al, acier .., fils électriques par exemple) permettant de conduire le courant et faire remonter la tension (U) de la languette 4 en opposition (ici U+) sur le même bord que celui ou sort la languette 5 (ici U-).

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre des revendications.

Si dans l'ensemble des exemples illustrés, les emballages souples des accumulateurs conformes à l'invention sont de format prismatique, l'invention s'applique bien entendu à tous les accumulateurs à emballage souple.

Un module de batterie M selon l'invention peut comprendre un nombre d'accumulateurs et de supports afférents empilés, qui est déterminé en fonction de chaque application.

### Liste des références citées :

[1]: Xuning Feng, et al. « Thermal runaway mechanism of lithium-ion battery for electric vehicles: A review», Energy Storage Materials, Volume 10, January 2018, Pages 246-267.

## Revendications

1. Module de batterie (M) comprenant :
- une pluralité d'accumulateurs, en particulier de géométrie prismatique (A1, A2...AN) comprenant chacun au moins une cellule électrochimique C formée d'une cathode (2), d'une anode (3) et d'un électrolyte intercalé entre la cathode et l'anode, et un emballage (6) souple agencé pour contenir avec étanchéité la cellule électrochimique tout en étant traversé par une partie de deux languettes (4, 5), formant les pôles ou bornes qui s'étendent dans le plan de la cellule électrochimique;
- une pluralité de cadres borgnes (10.1, 10.2...10.N), allongés selon une direction longitudinale (X) et latérale (Y), chaque cadre borgne formant un support avec logement d'un de la pluralité d'accumulateurs, les supports étant empilés et fixés les uns sur les autres selon une direction d'empilement (Z) orthogonale aux directions (X,Y), chaque support comprenant intérieurement, le long d'un de ses bords longitudinaux (12,14) et/ou latéraux (11, 13), des moyens de liaison mécanique avec au moins un support adjacent;
**caractérisé par**
- une pluralité de paires de barrettes métalliques (100), chaque barrette métallique d'une paire étant insérée dans un logement (25) ménagé dans un des bords latéraux et/ou longitudinaux d'un des supports pour former une cosse, une portion de chaque cosse étant en contact avec un pôle ou borne d'un des accumulateurs ;
- une paire de plaquettes métalliques (200) formant chacune un busbar qui s'étend selon la direction d'empilement (Z), chaque busbar étant soudée à l'une des cosses de chaque paire de cosses, chaque busbar comprenant au moins une zone amincie (202) formant une ligne de rupture (L1, L2, L3) dont au moins une est agencée en regard de l'un et/ou l'autre de deux cadres borgnes adjacents, chaque ligne de rupture (202) étant dimensionnée pour rompre en cas de gonflement au-delà d'un volume prédéterminé d'un accumulateur dans l'un et/ou l'autre de deux cadres borgnes adjacents de sorte à interrompre le courant électrique circulant dans le module.

2. Module de batterie (M) selon la revendication 1, chaque busbar comprenant une pluralité de zones amincies (202) formant chacune une ligne de rupture (L1, L2, L3).

3. Module de batterie (M) selon la revendication 1 ou 2, au moins une partie des moyens de liaison mécanique étant agencée sur un bord des cadres borgnes, opposé à celui sur lequel le busbar est agencé.

4. Module de batterie (M) selon la revendication 1 à 3, le volume prédéterminé correspondant à un emballement thermique de l'accumulateur.

5. Module de batterie (M) selon l'une des revendications précédentes, lorsque les accumulateurs logés dans deux cadres borgnes adjacents sont connectés électriquement par un busbar, alors le busbar comporte au moins une zone amincie formant au moins une ligne de rupture (L1, L2, L3).

6. Module de batterie (M) selon l'une des revendications précédentes, chaque busbar (200) comprenant un nombre N-1 de lignes de rupture (L1, L2, L3) pour un nombre N de cadres borgnes empilés.

7. Module de batterie (M) selon l'une des revendications précédentes , comprenant des moyens de maintien d'écartement (102, 103, 104) des parties (201) séparées de busbar de part et d'autre après rupture de la zone amincie.

8. Module de batterie (M) selon la revendication 7, les moyens de maintien d'écartement comprenant :
- un ou plusieurs ergots (102), agencés chacun sur une face d'un cadre borgne ;
- un ou plusieurs évidements, notamment des rainures (103), agencés chacun sur une face d'un cadre borgne adjacent, en regard de la face du cadre borgne sur laquelle sont agencés le ou les ergots de sorte qu'avant rupture de la zone amincie chaque ergot est logé dans un évidement, notamment une rainure et qu'après rupture de la zone amincie, chaque ergot est dégagé de l'évidement, notamment la rainure, et en appui contre la face du cadre borgne adjacent en définissant un espace d'écartement entre les parties séparées de busbar.

9. Module de batterie (M) selon la revendication 8, comprenant au moins un ergot agencé sur le bord de chaque logement de cosse.

10. Module de batterie (M) selon l'une des revendications 7 à 9, les moyens de maintien d'écartement comprenant une ou plusieurs lames élastiquement déformables (104), en matériau isolant électrique, agencées sur le bord longitudinal ou latéral d'un cadre borgne en regard du busbar, de sorte qu'avant rupture de la zone amincie, chaque lame à l'état déformé est en appui contre le busbar, et qu'après rupture de la zone amincie, au moins une partie (105) de chaque lame à l'état non déformé est insérée entre les parties séparées de busbar en définissant l'espace d'écartement entre elles.

11. Module de batterie (M) selon l'une des revendications précédentes, la distance entre deux lignes de rupture de chaque busbar étant sensiblement égale à l'épaisseur d'un cadre borgne.

12. Module de batterie (M) selon l'une des revendications précédentes, la ligne de rupture de chaque busbar étant agencée sensiblement alignée avec la jointure entre deux cadres borgnes adjacents.

13. Module de batterie (M) selon l'une des revendications précédentes, l'épaisseur de ligne de rupture étant comprise entre 100 et 200 µm.

14. Module de batterie (M) selon l'une des revendications précédentes, l'épaisseur de la partie (201) de busbar adjacente à une ligne de rupture étant comprise entre 0,8 et 1mm.

15. Module de batterie (M) selon l'une des revendications précédentes, le matériau constitutif de chaque busbar étant choisi parmi l'aluminium et le cuivre.

16. Module de batterie (M) selon la revendication 15, l'aluminium étant de série 1000 de préférence selon les duretés H14,H18,H24.

17. Module de batterie (M) selon l'une des revendications précédentes, chaque accumulateur étant un accumulateur Li-ion dans lequel :
- le matériau d'électrode(s) négative(s) est choisi dans le groupe comportant le graphite, le lithium, l'oxyde de titanate Li₄TiO₅O₁₂ ;
- le matériau d'électrode(s) positive(s) est choisi dans le groupe des composés d'intercalation/insertion de type LiMO₂ avec M représentant Co, Ni ou Mn ; LiM'₂O₄ avec M' représentant Ni ou Mn ; LiM"PO₄ avec M" représentant Fe, Co, Mn ou Ni.

18. Pack-batterie comprenant au moins deux modules de batterie (M) selon l'une des revendications précédentes reliés électriquement entre eux au moyen d'au moins un busbar soudé sur au moins une partie des cosses, à l'extérieur de l'empilement du module.

## Patentansprüche

1. Batteriemodul (M), das Folgendes aufweist:
- eine Vielzahl von Akkumulatoren, insbesondere mit prismatischer Geometrie (A1, A2...AN), die jeweils mindestens eine elektrochemische Zelle C, die aus einer Kathode (2), einer Anode (3) und einem zwischen der Kathode und der Anode angeordneten Elektrolyten gebildet ist, und eine flexible Verpackung (6) aufweisen, die so eingerichtet ist, dass sie die elektrochemische Zelle dicht umschließt, während sie von einem Teil von zwei Zungen (4, 5) durchquert wird, die die Pole oder Klemmen bilden, die sich in der Ebene der elektrochemischen Zelle erstrecken;
- eine Vielzahl von Blindrahmen (10.1, 10.2...10.N), die sich in einer Längsrichtung (X) und einer Querrichtung (Y) erstrecken, wobei jeder Blindrahmen einen Träger mit Aufnahme für einen aus der Vielzahl der Akkumulatoren bildet, wobei die Träger in einer Stapelrichtung (Z) orthogonal zu den Richtungen (X, Y) gestapelt und aneinander befestigt sind, wobei jeder Träger innen entlang einer seiner Längskanten (12, 14) und/oder Querkanten (11, 13) Mittel zur mechanischen Verbindung mit mindestens einem benachbarten Träger aufweist;
**gekennzeichnet durch**
- eine Vielzahl von Metallleistenpaaren (100), wobei jede Metallleiste eines Paares in eine Aufnahme (25), die in einer der Querkanten und/oder Längskanten eines der Träger eingebracht ist, eingesetzt ist, um einen Kabelschuh zu bilden, wobei ein Abschnitt jedes Kabelschuhs mit einem Pol oder einer Klemme eines der Akkumulatoren in Kontakt steht;
- ein Paar Metallplättchen (200), die jeweils eine Sammelschiene bilden, die sich entlang der Stapelrichtung (Z) erstreckt, wobei jede Sammelschiene an einen der Kabelschuhe jedes Paares Kabelschuhe angelötet ist, wobei jede Sammelschiene mindestens einen verdünnten Bereich (202) aufweist, der eine Bruchlinie (L1, L2, L3) bildet, von der mindestens eine gegenüber dem einen und/oder dem anderen von zwei benachbarten Blindrahmen eingerichtet ist, wobei jede Bruchline (202) so ausgelegt ist, dass sie im Fall eines Aufblähens eines Akkumulators in dem einen und/oder dem anderen von zwei benachbarten Blindrahmen über ein vorbestimmtes Volumen hinaus bricht, um den in dem Modul fließenden elektrischen Strom zu unterbrechen.

2. Batteriemodul (M) nach Anspruch 1, wobei jede Sammelschiene eine Vielzahl von verdünnten Bereichen (202) aufweist, die jeweils eine Bruchlinie (L1, L2, L3) bilden.

3. Batteriemodul (M) nach Anspruch 1 oder 2, wobei mindestens ein Teil der mechanischen Verbindungsmittel an einer Kante der Blindrahmen, die zu der, an der die Sammelschiene eingerichtet ist, entgegengesetzt ist, eingerichtet ist.

4. Batteriemodul (M) nach Anspruch 1 bis 3, wobei das vorbestimmte Volumen einem thermischen Durchgehen des Akkumulators entspricht.

5. Batteriemodul (M) nach einem der vorhergehenden Ansprüche, wobei, wenn die Akkumulatoren, die in zwei benachbarten Blindrahmen aufgenommen sind, durch eine Sammelschiene elektrisch verbunden sind, dann die Sammelschiene mindestens einen verdünnten Bereich umfasst, der mindestens eine Bruchlinie (L1, L2, L3) bildet.

6. Batteriemodul (M) nach einem der vorhergehenden Ansprüche, wobei jede Sammelschiene (200) eine Anzahl N-1 von Bruchlinien (L1, L2, L3) für eine Anzahl N von gestapelten Blindrahmen aufweist.

7. Batteriemodul (M) nach einem der vorhergehenden Ansprüche, das Mittel zur Aufrechterhaltung einer beiderseitigen Beabstandung (102, 103, 104) der getrennten Sammelschienenteile (201) nach einem Bruch des verdünnten Bereichs aufweist.

8. Batteriemodul (M) nach Anspruch 7, wobei die Mittel zur Aufrechterhaltung einer Beabstandung Folgendes aufweisen:
- eine oder mehrere Nasen (102), die jeweils auf einer Seite eines Blindrahmens angeordnet sind;
- eine oder mehrere Aussparungen, insbesondere Nuten (103), die jeweils auf einer Seite eines benachbarten Blindrahmens gegenüber der Seite des Blindrahmens, auf der die eine oder die mehreren Nasen eingerichtet sind, eingerichtet sind, sodass vor einem Bruch des verdünnten Bereichs jede Nase in einer Aussparung, insbesondere einer Nut, aufgenommen ist und nach einem Bruch des verdünnten Bereichs jede Nase aus der Aussparung, insbesondere der Nut, entfernt ist und an der Seite des benachbarten Blindrahmens anliegt und dabei einen Beabstandungsraum zwischen den getrennten Sammelschienenteilen definiert.

9. Batteriemodul (M) nach Anspruch 8, das mindestens eine an der Kante jeder Kabelschuhaufnahme eingerichtete Nase aufweist.

10. Batteriemodul (M) nach einem der Ansprüche 7 bis 9, wobei die Mittel zur Aufrechterhaltung einer Beabstandung eine oder mehrere elastisch verformbare Lamellen (104) aus einem elektrisch isolierenden Material aufweisen, die an der Längskante oder Querkante eines Blindrahmens gegenüber der Sammelschiene eingerichtet sind, sodass vor einem Bruch des verdünnten Bereichs jede Lamelle im verformten Zustand an der Sammelschiene anliegt und nach einem Bruch des verdünnten Bereichs mindestens ein Teil (105) jeder Lamelle im nicht verformten Zustand zwischen den getrennten Sammelschienenteilen eingefügt ist und so den Beabstandungsraum zwischen diesen definiert.

11. Batteriemodul (M) nach einem der vorhergehenden Ansprüche, wobei der Abstand zwischen zwei Bruchlinien jeder Sammelschiene im Wesentlichen gleich der Dicke eines Blindrahmens ist.

12. Batteriemodul (M) nach einem der vorhergehenden Ansprüche, wobei die Bruchlinie jeder Sammelschiene im Wesentlichen nach der Verbindungsstelle zwischen zwei benachbarten Blindrahmen ausgerichtet ist.

13. Batteriemodul (M) nach einem der vorhergehenden Ansprüche, wobei die Dicke der Bruchlinie zwischen 100 und 200 µm beträgt.

14. Batteriemodul (M) nach einem der vorhergehenden Ansprüche, wobei die Dicke des Sammelschienenteils (201) benachbart zu einer Bruchlinie zwischen 0,8 und 1 mm beträgt.

15. Batteriemodul (M) nach einem der vorhergehenden Ansprüche, wobei das Material, aus dem jede Sammelschiene besteht, aus Aluminium und Kupfer ausgewählt ist.

16. Batteriemodul (M) nach Anspruch 15, wobei das Aluminium aus der 1000er-Serie stammt und vorzugsweise den Härten H14, H18, H24 entspricht.

17. Batteriemodul (M) nach einem der vorhergehenden Ansprüche, wobei jeder Akkumulator ein Li-Ionen-Akkumulator ist, wobei:
- das Material der negativen Elektrode(n) aus der Gruppe ausgewählt ist, die Graphit, Lithium, Titanatoxid Li₄TiO₅O₁₂ umfasst;
- das Material der positiven Elektrode(n) aus der Gruppe der Interkalations-/Einlagerungsverbindungen vom Typ LiMO₂, wobei M Co, Ni oder Mn darstellt; LiM'₂O₄, wobei M' Ni oder Mn darstellt; LiM"PO₄, wobei M" Fe, Co, Mn oder Ni darstellt, ausgewählt ist.

18. Batteriepack mit mindestens zwei Batteriemodulen (M) nach einem der vorhergehenden Ansprüche, die mittels mindestens einer Sammelschiene, die außerhalb des Stapels des Moduls an mindestens einen Teil der Kabelschuhe angelötet ist, elektrisch miteinander verbunden sind.

## Claims

1. Battery module (M) comprising:
- a plurality of accumulators, in particular of prismatic geometry (A1, A2...AN) each comprising at least one electrochemical cell C formed of a cathode (2), an anode (3) and an electrolyte intercalated between the cathode and the anode, and a flexible packaging (6) arranged to contain the electrochemical cell in a sealed manner while at the same time being passed through by a part of two tabs (4, 5), forming the poles or terminals that extend in the plane of the electrochemical cell;
- a plurality of blind frames (10.1, 10.2...10.N), which are elongate in a longitudinal (X) and lateral (Y) direction, each blind frame forming a holder with a housing for one of the plurality of accumulators, the holders being stacked and secured to one another in a stacking direction (Z) orthogonal to the directions (X,Y), each holder comprising internally, along one of its longitudinal (12,14) and/or lateral (11, 13) edges, means for mechanical connection with at least one adjacent holder; **characterized by**
- a plurality of pairs of metal bars (100), each metal bar of a pair being inserted in a housing (25) formed in one of the lateral and/or longitudinal edges of one of the holders so as to form a lug, a portion of each lug being in contact with a pole or terminal of one of the accumulators;
- a pair of metal plates (200) each forming a busbar that extends in the stacking direction (Z), each busbar being welded to one of the lugs of each pair of lugs, each busbar comprising at least one thinned zone (202) forming a rupture line (L1, L2, L3) at least one of which is arranged facing one and/or the other of two adjacent blind frames, each rupture line (202) being dimensioned so as to rupture in the event of swelling, beyond a predetermined volume, of an accumulator in one and/or the other of two adjacent blind frames in such a way as to interrupt the electrical current flowing in the module.

2. Battery module (M) according to Claim 1, each busbar comprising a plurality of thinned zones (202) each forming a rupture line (L1, L2, L3).

3. Battery module (M) according to Claim 1 or 2, at least a part of the mechanical connection means being arranged on an edge of the blind frames, opposite the edge on which the busbar is arranged.

4. Battery module (M) according to Claims 1 to 3, the predetermined volume corresponding to thermal runaway of the accumulator.

5. Battery module (M) according to one of the preceding claims, when the accumulators housed in two adjacent blind frames are connected electrically by a busbar, then the busbar includes at least one thinned zone forming at least one rupture line (L1, L2, L3).

6. Battery module (M) according to one of the preceding claims, each busbar (200) comprising a number N-1 of rupture lines (L1, L2, L3) for a number N of stacked blind frames.

7. Battery module (M) according to one of the preceding claims, comprising separation maintenance means (102, 103, 104) for keeping the separated busbar parts (201) apart after rupture of the thinned zone.

8. Battery module (M) according to Claim 7, the separation maintenance means comprising:
- one or more studs (102), each arranged on a face of a blind frame;
- one or more recesses, in particular grooves (103), each arranged on a face of an adjacent blind frame, facing the face of the blind frame on which the stud or studs are arranged such that before rupture of the thinned zone, each stud is housed in a recess, in particular a groove, and such that after rupture of the thinned zone, each stud is removed from the recess, in particular the groove, and bears against the face of the adjacent blind frame, defining a separation space between the separated busbar parts.

9. Battery module (M) according to Claim 8, comprising at least one stud arranged on the edge of each lug housing.

10. Battery module (M) according to one of Claims 7 to 9, the separation maintenance means comprising one or more elastically deformable blades (104), made of electrically insulating material, arranged on the longitudinal or lateral edge of a blind frame facing the busbar, such that before rupture of the thinned zone, each blade in the deformed state bears against the busbar, and such that after rupture of the thinned zone, at least one part (105) of each blade in the non-deformed state is inserted between the separated busbar parts, defining the separation space between them.

11. Battery module (M) according to one of the preceding claims, the distance between two rupture lines of each busbar being substantially equal to the thickness of a blind frame.

12. Battery module (M) according to one of the preceding claims, the rupture line of each busbar being arranged substantially aligned with the join between two adjacent blind frames.

13. Battery module (M) according to one of the preceding claims, the rupture line thickness being between 100 and 200 µm.

14. Battery module (M) according to one of the preceding claims, the thickness of the busbar part (201) adjacent to a rupture line being between 0.8 and 1 mm.

15. Battery module (M) according to one of the preceding claims, the constituent material of each busbar being selected from aluminium and copper.

16. Battery module (M) according to Claim 15, the aluminium being 1000 series aluminium, preferably of hardness H14,H18,H24.

17. Battery module (M) according to one of the preceding claims, each accumulator being a Li-ion accumulator in which:
- the negative electrode material is selected from the group including graphite, lithium, titanate oxide Li₄TiO₅O₁₂;
- the positive electrode material is selected from the group of intercalation/insertion compounds of type LiMO₂ with M representing Co, Ni or Mn; LiM'₂O₄ with M' representing Ni or Mn; LiM"PO₄ with M" representing Fe, Co, Mn or Ni.

18. Battery pack comprising at least two battery modules (M) according to one of the preceding claims, connected electrically to one another by means of at least one busbar welded to at least one part of the lugs, on the outside of the stack of the module.
